# EUROPEAN PATENT SPECIFICATION

(11) **EP 4 451 357 B1**
(45) Date of publication and mention of the grant of the patent: **09.09.2026**
(21) Application number: 23873064.2
(22) Date of filing: 26.09.2023
(51) Int. Cl.: H01M 4/04, H01M 4/62, H01M 4/139, B05C 5/02, B05C 9/14, F26B 5/04, F26B 3/04, F26B 13/18, F26B 13/10, F26B 3/30

(54) **ELECTRODE MANUFACTURING SYSTEM AND ELECTRODE MANUFACTURING METHOD FOR ADHESION ENHANCEMENT**
ELEKTRODENHERSTELLUNGSSYSTEM UND ELEKTRODENHERSTELLUNGSVERFAHREN ZUR HAFTVERBESSERUNG
SYSTÈME DE FABRICATION D'ÉLECTRODE ET PROCÉDÉ DE FABRICATION D'ÉLECTRODE POUR AMÉLIORATION D'ADHÉRENCE

(30) Priority: 26.09.2022 KR 20220121746
(43) Date of publication of application: 23.10.2024
(73) Proprietor: LG Energy Solution, Ltd., Seoul 07335 (KR)
(72) Inventor: KIM, Dong Hae, Daejeon 34122 (KR); SO, Ki Han, Daejeon 34122 (KR); KO, Young Kuk, Daejeon 34122 (KR); JUNG, Su Ho, Daejeon 34122 (KR); KIM, Woo Sung, Daejeon 34122 (KR)
(74) Representative: Plasseraud IP
(86) International application number: PCT/KR2023/014744
(87) International publication number: WO 2024/071949

(56) References cited:
- JP-A- 2004 071 472
- JP-A- 2015 118 801
- JP-A- 2016 186 371
- JP-A- H05 182 692
- KR-A- 20090 086 457
- KR-B1- 100 759 385
- US-A1- 2007 148 335
- US-A1- 2018 013 132
- US-A1- 2019 081 317
- US-A1- 2020 373 555
- XU, Y. ; YIN, G. ; MA, Y. ; ZUO, P. ; CHENG, X.: "Simple annealing process for performance improvement of silicon anode based on polyvinylidene fluoride binder", JOURNAL OF POWER SOURCES, ELSEVIER, AMSTERDAM, NL, vol. 195, no. 7, 2 April 2010 (2010-04-02), AMSTERDAM, NL, pages 2069 - 2073, XP026796113, ISSN: 0378-7753

## Description

### [Technical Field]

This application claims the benefit of priority to Korean Patent Application No. 10-2022-0121746, filed on September 26, 2022.

The present invention relates to a manufacturing system of electrodes for secondary batteries for improving adhesion, a method for manufacturing electrodes, and electrodes manufactured by the method.

### [Background Technology of the Invention]

With the technological development and increasing demand for mobile devices, the demand for secondary batteries is also increasing rapidly. Among them, lithium secondary batteries are widely used as an energy source for various electronic products, including mobile devices, due to their high energy density, high operating voltage, and excellent preservation and lifetime characteristics.

An electrode manufacturing process (hereinafter referred to as "electrode process") for manufacturing electrodes of a lithium secondary battery includes a coating process for applying an electrode slurry including an electrode active material to a surface of a metal foil, which is a current collector, a drying process for removing a solvent in the electrode slurry, a rolling process for rolling the dried electrode, a notching and slitting process for forming electrode tabs on the electrode, and cutting the electrode according to dimensions.

Among the above, the drying process of the electrode includes placing the electrode in an electrode drying oven configured for blowing hot air and/or irradiating with radiant heat, and the drying process proceeds as the electrode travels inside the drying oven at a speed in a predetermined range.

A conventional electrode manufacturing system or electrode manufacturing method is configured to pass electrodes through a drying oven at a transfer rate of 10 to 40 m/min, but in recent years, the transfer rate of electrodes traveling through the drying oven has been increasing to 70 to 100 m/min to increase the production efficiency of the electrode process.

Meanwhile, the electrode includes a binder to make the electrode active material, which is the material that constitutes the electrode, and the conductor to adhere well to each other, and to provide interfacial adhesion between the electrode active material layer and the current collector. Polyvinylidene fluoride (PVdF) based binders are widely used as binders for electrodes, especially for positive electrodes, because they have excellent adhesion and are chemically stable to electrolyte solutions.

These PVdF-based binders can be thermally/mechanically processed into different crystal structure phases, such as alpha, beta, and gamma, with a higher proportion of gamma phases known to favor electrode adhesion.

It is necessary to develop technology for electrode manufacturing system and electrode manufacturing method to increase the proportion of gamma phase in PVDF-based binders while improving the production speed of electrodes.

JP 2016 186371 A discloses a dryer, coating film forming system, drying method, and coating film forming method. US 2007/148335 A1 discloses a manufacturing electrode for electrochemical capacitor and apparatus for manufacturing electrode for electrochemical capacitor. JP 2004 071472 A discloses a drying device of coating sheet, and drying method of coating sheet. US 2020/373555 A1 discloses a densified battery electrodes and methods thereof. US 2018/013132 A1 discloses a method for manufacturing nonaqueous electrolyte secondary battery. US 2019/081317 A1 discloses a web coating and calendaring system and method.

### [Description of the Invention]

### [Technical Problem]

The present invention aims to solve the above problems, and to provide an electrode manufacturing system that can change the crystalline phase of a PVdF-based binder to improve adhesion while having an excellent production speed of the electrode, and a manufacturing method using the system.

### [Technical Solution]

According to an exemplary embodiment of the present invention, an electrode manufacturing system is provided in appended claim 1.

In an exemplary embodiment of the present invention, n (n is an integer greater than or equal to 2) heat sources are arranged in the direction in which the electrode substrate is transferred (MD; machine direction), wherein the n (n is an integer greater than or equal to 2) heat sources may be controlled independently.

In an exemplary embodiment of the present invention, the heat source may be a heating roller with heat rays embedded inside a transfer roller for transferring an electrode substrate.

In an exemplary embodiment of the present invention, the heat source may be selected from a laser module configured to apply a laser to an electrode substrate and an infrared heater configured to apply infrared radiation.

In an exemplary embodiment of the present invention, the electrode manufacturing system may further include: a control part for controlling the operation of the heat source.

In an exemplary embodiment of the present invention, the transferring part may be configured to transfer the electrode substrate at a speed of 70 to 100 m/min.

In an exemplary embodiment of the present invention, the coating part includes: a first coating part for applying an electrode slurry including a PVdF-based binder to one side of the electrode current collector; and a second coating part for applying an electrode slurry including a PVdF-based binder to the other side of the electrode current collector, the drying part includes: a first drying part for drying the electrode substrate that has passed through the first coating part; and a second drying part for drying the electrode substrate that has passed through the second coating part, the heat treatment part includes a first heat treatment part disposed downstream of the first drying part and configured to apply heat to the electrode substrate taken out from the first drying part; and a second heat treatment part disposed downstream of the second drying part and configured to apply heat to the electrode substrate taken out from the second drying part, wherein an electrode substrate transferred by the transferring part may be configured to sequentially pass through a first coating part, a first drying part, a first heat treatment part, a second coating part, a second drying part, and a second heat treatment part.

In an exemplary embodiment of the present invention, the heat treatment part may include an open and close type bulkhead for blocking at least a portion of a space to which a heat source is applied from the outside.

In an exemplary embodiment of the present invention, the heat treatment part may be configured to apply heat only to a coated part where an electrode active material layer is formed on the electrode substrate.

According to another exemplary embodiment of the present invention, an electrode manufacturing method is laid out in appended claim 10.

In an exemplary embodiment of the present invention, in the drying step, the transfer rate of the electrode substrate may be in the range of 70 to 100 m/min.

In an exemplary embodiment of the present invention, in the drying step, the drying temperature may be in the range of 80 to 120°C.

### [Advantageous Effects]

According to the present invention, the heat treatment part applies additional heat to the dried electrode substrate to induce recrystallization of the PVdF-based binder, thereby increasing the proportion of gamma-phase crystals and thereby improving the adhesion of the electrode.

According to the present invention, recrystallization through annealing of the heat treatment part is used without the need to reduce the transfer rate of the electrode substrate, and thus the production efficiency of the electrode is excellent.

According to the present invention, solvents that may remain in the electrode substrate after it is taken out from the drying oven can be completely removed while passing through the heat treatment part, thereby reducing the time required for the vacuum drying process after drying.

### [Brief Description of the Drawings]

FIG. 1 is a schematic illustration of an electrode manufacturing system according to an exemplary embodiment of the present invention.
FIG. 2 is an enlarged view of a heat treatment part in FIG. 1.
FIG. 3 is an enlarged view of a heat treatment part according to an exemplary embodiment of the present invention.
FIG. 4 is an enlarged view of a heat treatment part according to an exemplary embodiment of the present invention.
FIG. 5 is a schematic diagram illustrating an electrode manufacturing system according to an embodiment of the present invention.
FIG. 6 is a schematic diagram illustrating an electrode manufacturing system in the form of a two-layer structure in one example of the present invention.
FIG. 7 is a flowchart illustrating a sequence of electrode manufacturing method in one example of the present invention.

### [Detailed Description]

The present invention may have various modifications and various examples, and specific examples are illustrated in the drawings and described in detail in the description. However, it should be understood that the present invention is not limited to specific embodiments.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

As used herein, an electrode substrate is a concept that includes both an electrode slurry applied to an electrode current collector and an electrode slurry applied to an electrode current collector dried to form an electrode active material layer on the electrode current collector.

The present invention provides an electrode manufacturing system, an electrode manufacturing method using the system, and an electrode manufactured thereby.

Polyvinylidene fluoride (PVdF) binders are commonly used as binders for electrodes. The crystal structure of PVdF binders has alpha (α), beta (β), gamma (γ), and delta (δ) crystal phases, and the type and ratio of crystal phases affect the adhesion of PVdF binders. Specifically, the gamma (γ) crystal phase is known to be more favorable for improving adhesion compared to other crystal phases. Therefore, increasing the proportion of gamma (γ) crystal phase in PVdF-based binders can increase the adhesion of the electrode without increasing the binder content.

To increase the proportion of gamma (γ) crystal phase in the PVdF binder contained in the electrode, recrystallization of alpha (α) and beta (β) crystal phases into gamma (γ) crystal phase can be considered, which requires heating the PVdF binder to a temperature above 170 °C, the crystal melting temperature (Tm).

Since the drying process of the electrode applies high-temperature heat to the electrode substrate traveling through the drying oven, it is theoretically possible to recrystallize the crystal phase of the PVdF binder into the gamma crystal phase by setting the drying temperature of the drying process to 170°C or higher, but it is practically impossible or difficult to recrystallize the PVdF binder during the drying process of the electrode at the production site.

Even if the drying temperature of the drying oven is set to a temperature of 170°C or higher, the electrode slurry contains a solvent, and when the solvent is vaporized, the surrounding temperature is lowered due to the heat of vaporization, so the temperature of the electrode substrate traveling in the drying oven is bound to be much lower than 170°C, more specifically, a temperature of 80~120°C. Furthermore, in recent electrode manufacturing systems, in order to maximize the productivity of the electrode, the transfer rate of the electrode substrate is set to 50-100 m/min, more specifically 70-100 m/min, so the drying temperature in the drying oven may be even lower. As the transfer rate of the electrode substrate increases, the time that the electrode substrate remains in the drying oven inevitably decreases, and thus an increase in the transfer rate of the electrode substrate makes recrystallization of the PVdF-based binder more difficult during electrode drying.

In an electrode manufacturing system and an electrode manufacturing method, the present invention is characterized in that a heat treatment part is provided downstream of the drying part so that high temperature heat can be applied to the electrode substrate after drying the electrode substrate in order to recrystallize the crystal phase of a PVdF-based binder in the electrode into a gamma phase without reducing the production rate of the electrode.

Specifically, in an electrode manufacturing system according to the present invention, a heat treatment part for supplying high temperature heat to a dried electrode substrate is separately arranged downstream of the drying part, and as the heat treatment part supplies sufficient heat to the electrode substrate to recrystallize the alpha (α) and beta (β) crystal phases of the PVdF-based binder into a gamma (γ) crystal phase, the proportion of the gamma phase of the PVdF-based binder is increased, thereby improving the adhesion of the electrode.

Hereinafter, an electrode manufacturing system according to the present invention will be described in detail.

In one example, the electrode manufacturing system according to the present invention includes a transferring part including a transfer roller configured to support and unidirectionally transfer a long sheet-shaped electrode substrate; a coating part for applying an electrode slurry including a polyvinylidene fluoride (PVdF)-based binder to the electrode substrate; a drying part for drying the electrode substrate to which the electrode slurry has been applied; and a heat treatment part disposed downstream of the drying part and configured to apply heat to the electrode substrate taken out from the drying part.

The transferring part may include a plurality of transfer rollers positioned downstream of the electrode substrate, each of the transfer rollers configured to rotate by a driving force applied from a motor, and the electrode substrate may be transferred in one direction by the rotational motion of the transfer rollers. The transferring part may include an unwinder configured to unwind the wound current collector sheet and a rewinder for winding the electrode substrate into rolls.

The coating part includes a slot die coater for applying the electrode slurry and a coating roller disposed face to face with the slot die. The electrode slurry discharged from the slot die coater is applied to an electrode substrate supported and transferred by the coating roller to form an electrode slurry coating layer.

The electrode slurry may include an electrode active material, a binder, a conductor, and a solvent. The electrode active material may be a positive electrode active material or a negative electrode active material. The binder may include a PVdF-based binder, and may further include other types of binders. In a specific example, the PVdF-based binder includes one or more selected from a group consisting of a homopolymer of vinylidene fluoride, a copolymer with a monomer capable of copolymerizing with vinylidene fluoride, and a mixture thereof. The monomer copolymerizable with vinylidene fluoride may include one or more selected from vinyl fluoride, trifluoroethylene (TrFE), chlorofluoroethylene (CTFE), 1,2-difluoroethylene, tetrafluoroethylene (TFE), hexafluoropropylene (HFP), perfluoro(alkylvinyl) ether, perfluoro(1,3-dioxol), and perfluoro(2,2-dimethyl-1,3-dioxol) (PDD).

The solvent is not particularly limited as long as it is a solvent for the preparation of a slurry for a secondary battery electrode, and specifically, NMP (N-Methyl-2-pyrrolidone) and water can be exemplified.

The drying part dries the electrode slurry by applying heat to the electrode substrate to remove a solvent in the applied electrode slurry. The drying part includes a drying furnace or a drying oven, and the drying furnace or the drying oven may be those conventionally known in the art. Such a drying furnace or drying oven may be applied by a hot air method, a radiant heat method, a direct heating method, or an induction heating method, or a combination thereof.

The heat treatment part applies heat to the electrode substrate discharged from the drying part to recrystallize the crystal phase of the PVdF-based binder in the electrode substrate. Specifically, the PVdF-based binder is a polymer between PVdF monomers or between PVdF monomers and monomers of other materials, and the PVdF can form various crystal phases depending on the temperature conditions, and the crystal phase state can affect the adhesion of the polymer as well as the electrode properties. More specifically, the crystal phase of PVdF has alpha (α), beta (β), and gamma (γ) crystal phases depending on the arrangement of the chains. In this case, the gamma (γ) crystal phase has higher adhesion than other crystal phases, so it is desirable to increase the proportion of gamma (γ) phase to increase the adhesion of the binder.

Through various experiments and observations, the inventor of the present invention has observed the PVdF phase change according to heat treatment temperature, and as a result, when the dried electrode substrate is provided with heat above 170°C, which is the crystal melting temperature (Tm) of PVdF, it induces recrystallization of alpha (α) and beta (β) crystals, resulting in a significant increase in the proportion of gamma (γ) crystal phase. As a result, it was found that the PVdF-based binder with a high proportion of gamma (γ) phase can increase the adhesion of the electrode, effectively reducing the deintercalation of the electrode active material layer in the rolling and slitting process after the drying process.

Accordingly, by providing a heat treatment part downstream of the drying part, the present invention provides an annealing system capable of manufacturing an electrode with improved adhesion through crystal changes of a PVdF-based binder in an electrode substrate by applying high temperature heat to an electrode substrate that has been dried.

The heat treatment part includes a heat source configured to apply heat of at a temperature between 170°C and 300°C, for recrystallization of the PVdF-based binder. It is undesirable to heat the electrode substrate above 300°C as this may cause combustion of the PVdF binder.

In some embodiments, n (n is an integer greater than or equal to 2) heat sources are spaced apart in the machine direction (MD), which is the direction in which the electrode substrate applied with the electrode slurry is transferred, and the n (n is an integer greater than or equal to 2) heat sources can be controlled independently. Accordingly, the electrode substrate may be heat treated under conditions optimized for each model of electrode. In other words, the electrode substrate can be classified into several models according to the type of electrode active material, the composition of the electrode active material layer, the thickness of the electrode active material layer, the type of current collector, the thickness of the current collector, and the like, and the heat treatment conditions that can maximize the adhesion force are different for each electrode model, so it is desirable that the plurality of heat sources are independently controlled in order to heat treat according to the heat treatment conditions optimized for each electrode model.

In some embodiments, the heat source may be a heating roller having a heat ray embedded in the interior of the transfer roller for transferring the electrode substrate. With the heat ray embedded in the interior of the transfer roller, heat applied from the heat ray is transferred through the transfer roller to the electrode substrate supported by the transfer roller.

In some embodiments, the heat source may be selected from a laser module configured to apply a laser to the electrode substrate and an infrared heater configured to apply infrared light. The laser module may be configured to apply laser light directly to the electrode substrate, and the IR heater may be configured to apply radiant heat to the electrode substrate using an infrared lamp or the like.

In some embodiments, the electrode manufacturing system of the present invention further includes a control part that controls operation of the n (n is an integer greater than or equal to 2) heat sources. Specifically, the control part controls whether a laser module, an infrared heater, or a heating roller is operated or controls the magnitude of the output of thermal energy applied by each heat source.

In addition, present invention provides a method of manufacturing an electrode. In the present invention, the foregoing description of an electrode manufacturing system is also applicable to an electrode manufacturing method, and redundant specific descriptions are omitted.

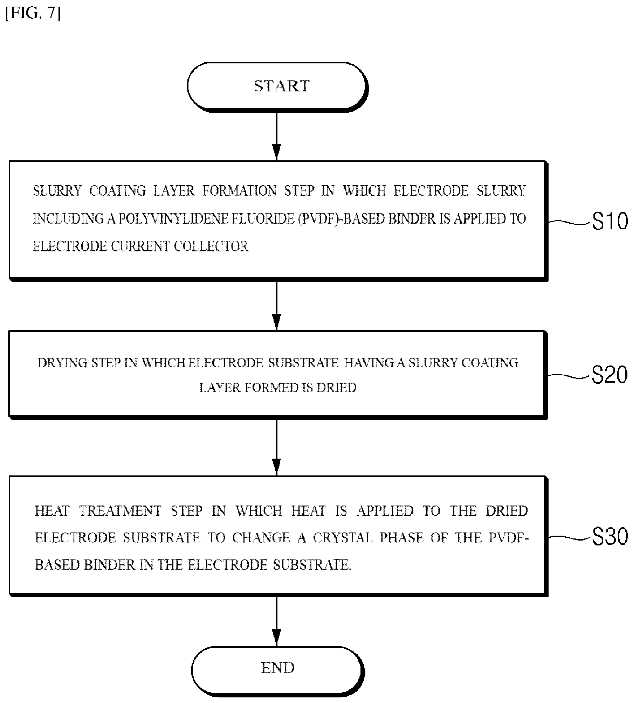

FIG. 7 is a flowchart to illustrate an electrode manufacturing method according to the present invention. Referring to FIG. 7, an electrode manufacturing method according to an exemplary embodiment of the present invention includes a slurry coating layer formation step S10 in which an electrode slurry including a polyvinylidene fluoride (PVdF)-based binder is applied to an electrode current collector; a drying step S20 in which an electrode substrate having a slurry coating layer formed is dried; and a heat treatment step S30 in which heat is applied to the dried electrode substrate to change a crystal phase of the PVdF-based binder in the electrode substrate.

The slurry coating layer forming step S10 is a step of applying an electrode slurry including a PVdF-based binder on the electrode current collector being transferred in one direction.

In the drying step S20, the electrode substrate on which the electrode slurry coating layer is formed may be dried using the drying oven described above. In the above drying step S20, the transfer rate of the electrode substrate is 50 to 100 m/min, preferably 70 to 100 m/min, more preferably 80 to 100 m/min in terms of production efficiency of the electrode. In the drying step S20 according to some embodiments, the drying temperature of the drying oven may be in the range of 80 to 120°C. Here, the drying temperature refers to the temperature of the electrode substrate being transferred in the drying oven. Even if the temperature of the drying oven is set to 170°C or higher, since the electrode slurry being dried contains a solvent and the transfer rate of the electrode substrate reaches 50 m/min to 100 m/min, the temperature of the electrode substrate may be in the range of 150°C or lower, more particularly 70°C to 140°C, more particularly 75°C to 130°C, more particularly 80°C to 120°C, which is a lower temperature than 170°C.

The heat treatment step S30 may be a step in which high temperature heat is applied to the electrode substrate that has undergone the drying step S20 to change the crystal phase of the PVdF-based binder. By the heat treatment step S30, the crystal structure of the alpha phase and the beta phase of the PVdF-based binder is recrystallized into the crystal structure of the gamma phase, so that the proportion of the gamma phase in the PVdF-based binder can be increased.

The heat treatment step S30 includes applying heat of 170°C or higher to the electrode substrate. In some embodiments, the time of applying heat in the above temperature range may be from 10 seconds to 1 hour, more specifically from 30 seconds to 30 minutes, more specifically from 1 minute to 10 minutes.

In some embodiments, the electrode manufacturing method according to the present invention may further include a vacuum drying step S40 to completely remove moisture from the dried electrodes. The vacuum drying step S40 is a separate step from the heat treatment step S30, and the drying temperature in the vacuum drying step S40 may be from 80 to 120 °C. The electrode manufacturing method according to the present invention can reduce the time required for the vacuum drying step, as water is also removed in the heat treatment step, ultimately improving the production efficiency of electrode manufacturing.

### [Mode for carrying out the invention]

Hereinafter, specific examples of the present invention will be described in detail with reference to the accompanying drawings.

### (First embodiment)

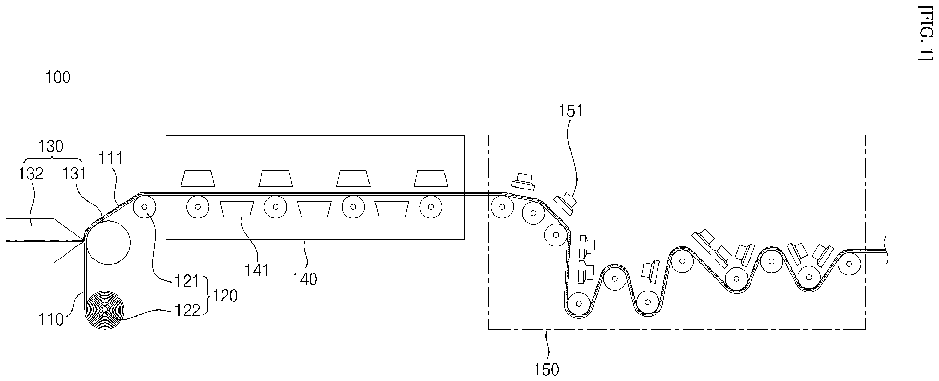

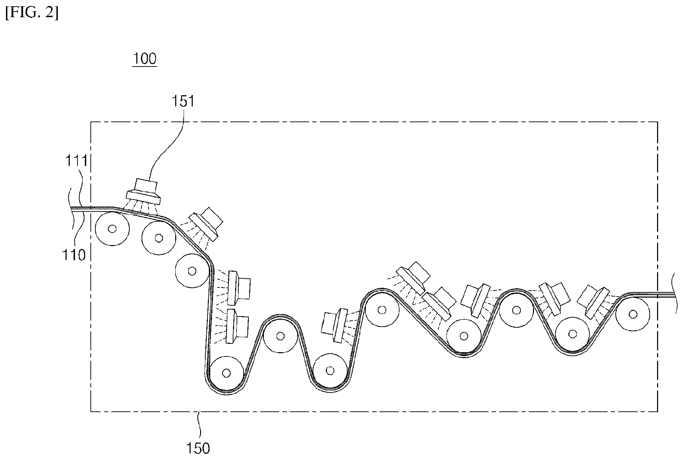

FIG. 1 is a schematic diagram illustrating an electrode manufacturing system according to a first embodiment of the present invention, and FIG. 2 is an enlarged view of the heat treatment part of FIG. 1. Referring to FIG. 1, an electrode manufacturing system 100 according to the present invention includes a transferring part 120, a coating part 130, a drying part 140, and a heat treatment part 150.

The transferring part 120 may include a plurality of transfer rollers 121, which may rotate under the driving force of a motor (not shown) to transfer the electrode substrate 110 in one direction. The transferring part 120 may include an unwinder 122 configured to unwind the wound current collector sheet and a rewinder (not shown) for winding the electrode substrate into rolls.

The transferring part 120 is configured to transfer the electrode substrate 110 at a speed of 50 to 100 m/min, preferably 70 to 100 m/min, more preferably 80 to 100 m/min. Accordingly, the electrode manufacturing system 100 according to the present invention has a very high production efficiency of electrodes.

The coating part 130 may include a slot die coater 132 that discharges the electrode slurry 111 and a coating roller 131 disposed facing the slot die coater 132. The electrode slurry 111 discharged from the slot die coater 132 is applied to the electrode substrate 110, which is supported and transferred by the coating roller 131, to form an electrode slurry coating layer.

The drying part 140 may include one or two or more drying ovens configured to dry the electrode substrate 110 being transferred by the transfer roller 121 at a high temperature.

In an exemplary embodiment, the drying oven may be compartmentalized into a plurality of drying zones. And each set drying temperature of the plurality of drying zones may be independently controlled. Specifically, a temperature rising drying zone, where the drying rate of the electrodes is increased, may be arranged at the front end, a constant rate drying zone, where the increased drying rate in the temperature rising drying zone is maintained at a constant rate, may be arranged downstream of the temperature rising drying zone, and a reduced rate drying zone, where the drying rate of the electrodes is reduced due to near completion of drying, may be arranged downstream of the constant rate drying zone.

In an exemplary embodiment, the drying oven may include drying means for drying an electrode slurry applied to an electrode. The drying means may not be limited as long as it is a means for providing thermal energy to the electrode slurry to remove a solvent in the electrode slurry to dry the electrode slurry.

According to an exemplary embodiment, the drying means may be one or two types selected among a hot air supply unit and a heater.

The hot air supply unit may be configured to blow hot air toward the electrode substrate 110 being transferred within the drying oven. In one embodiment, the hot air supply unit may include a heat exchanger (not shown) for heating the supplied outside air; a hot air blowing nozzle installed within the drying oven and configured to blow hot air toward the electrode substrate; a blower fan for supplying the outside air heated by the heat exchanger to the hot air blowing nozzle through a duct connected to an interior space of the drying oven; and a damper installed within the duct for regulating the amount of hot air supplied.

The heater may be configured to apply radiant heat to the electrode substrate 110 as it is transferred within the drying oven. It may further comprise a shield, if desired. The shield may be coupled to a lower side of the heater, to regulate the location and/or area of the region irradiated by the radiant heat emitted from the heater.

The drying part 140 plays a role in drying the solvent of the slurry coating layer, and the number or arrangement and the like of drying ovens may be appropriately changed according to the composition of the electrode slurry 111 and the application thickness of the electrode slurry and the like.

FIG. 2 is an enlarged schematic view of the heat treatment part 150 of the electrode manufacturing system 100 of FIG. 1. Referring to FIGS. 1 and 2, the heat treatment part 150 is disposed downstream of the drying part 140. In some embodiments, the heat treatment part 150 is disposed near an outlet of the drying part 140, which can improve the recrystallization efficiency of the PVdF-based binder by applying high temperature heat to the electrode substrate 110 before the temperature of the electrode substrate 110 taken out from the drying part 140 decreases.

The heat treatment part 150 includes a heat source 151, and the heat source 151 is configured to apply additional heat to the dried electrode substrate 110. The heat source 151 is configured to apply heat above 170°C to the electrode substrate 110, which may cause the alpha (α) and beta (β) crystal phases of the PVdF-based binder contained in the electrode active material layer to recrystallize into gamma crystal phases, thereby improving electrode adhesion.

n (n is an integer greater than or equal to 2) heat sources 151 are disposed in the direction in which the electrode substrate 110 is transferred (MD; Machine direction), and the n (n is an integer greater than or equal to 2) heat sources 151 may be controlled independently.

In some embodiments, the heat source 151 may be selected from a laser module configured to apply laser light to the electrode substrate and an infrared heater configured to apply infrared light. The laser module may be configured to apply laser light directly to the electrode substrate, and the IR heater may be configured to apply radiant heat to the electrode substrate using an infrared lamp or the like.

In some embodiments, the electrode manufacturing system 100 may further include a control part for independently controlling the plurality of heat sources 151, controlling the on-off control of the heat sources 151, and/or controlling the output of the heat sources 151.

In some embodiments, the heat treatment part 140 may be configured to apply heat only to a coated part where an electrode active material layer has been formed on the electrode substrate 110. Applying high temperatures to a non-coated part where the electrode active material layer is not formed so that the current collector is exposed, may cause thermal wrinkling near the boundary between the non-coated part and the coated part due to the difference in elongation between the non-coated part and the coated part, thus reducing the risk of defects due to thermal wrinkling by applying heat only to the coated part.

In some embodiments, the heat treatment part 150 may further include an open and close type bulkhead for blocking at least a portion of the space, where the heat source is applied, from the outside. The bulkhead serves to protect the operator from the high temperature heat.

### (Second embodiment)

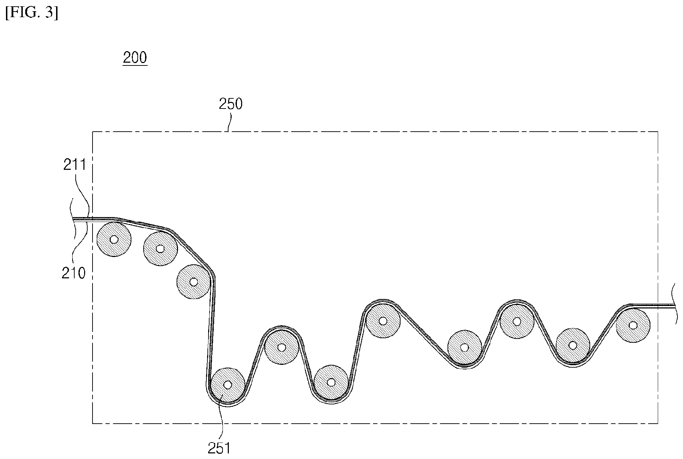

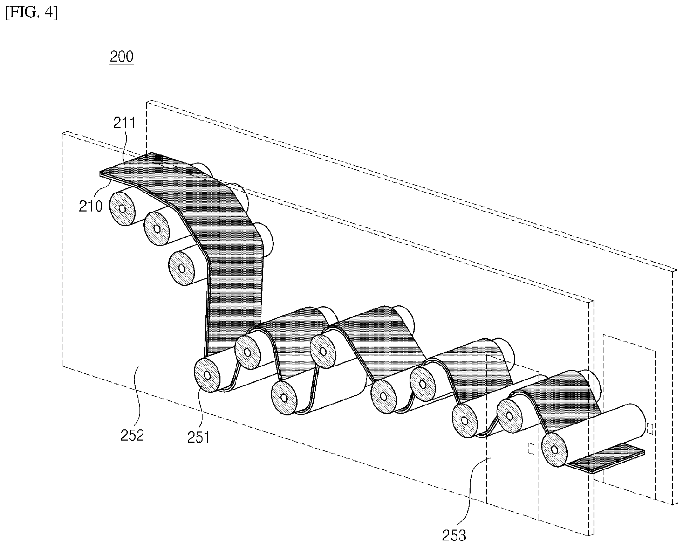

FIGS. 3 and 4 are enlarged views of a heat treatment part according to a second embodiment of the invention. In the following, the differences from the heat treatment part according to the first embodiment will be described in detail.

Referring to FIG. 3, the heat source 251 of the heat treatment part 250 according to the second embodiment may be a heating roller with heat rays embedded. Since the heat ray is embedded in the interior of the transfer roller, the heat applied from the heat ray is transferred to the electrode substrate 210 via the transfer roller.

The heat ray may not be limited as long as it can raise the temperature of the heating roller, and specifically, an induction heating coil may be exemplified. The induction heating coil may be subjected to an alternating voltage to generate thermal energy in a short time. The alternating voltage applied to the induction heating coil may have a frequency in the range of approximately 100 KHz to 500 kHz. The induction heating coil may be connected to an alternating current power source. When an alternating voltage is applied to the induction heating coil, an electromotive force is induced by an electromagnetic induction phenomenon, and an electrode may be heated by an induced current generated by the electromotive force.

In some embodiments, the induction heating coil may further have a magnetic material installed in a core part of the induction heating coil to focus the magnetic flux generated by the induction heating coil. The magnetic material core may adjust the amount of thermal energy by adjusting the path of the magnetic field induced by the induction heating coil.

By controlling the on-off behavior of the heat ray embedded in the heating roller and/or the output of the heat ray, the control part can appropriately control the amount of thermal energy applied to the electrode substrate.

Referring to FIG. 4, the heat treatment part 250 may include an open and close type bulkhead 252 for blocking at least a portion of the space where the heat source 251 is applied from the outside. The open and close type bulkhead 252 may be located outside of the heat treatment part 250 to prevent thermal energy from dissipating to the outside, thereby accommodating the safety of the operator from high temperature heat, while at the same time reducing the loss of heat generated in the heat treatment part 250, thereby allowing the heat treatment part 250 to maintain a high temperature. The bulkhead 252 is positioned on both sides of the heat treatment part 250 in the traveling direction (MD) of the electrode substrate 210, spaced apart by a predetermined distance from the heat treatment part 250, and may be an open and close structure that include access doors 253 to facilitate operator access to the heat treatment part 250 as needed.

### (Third embodiment)

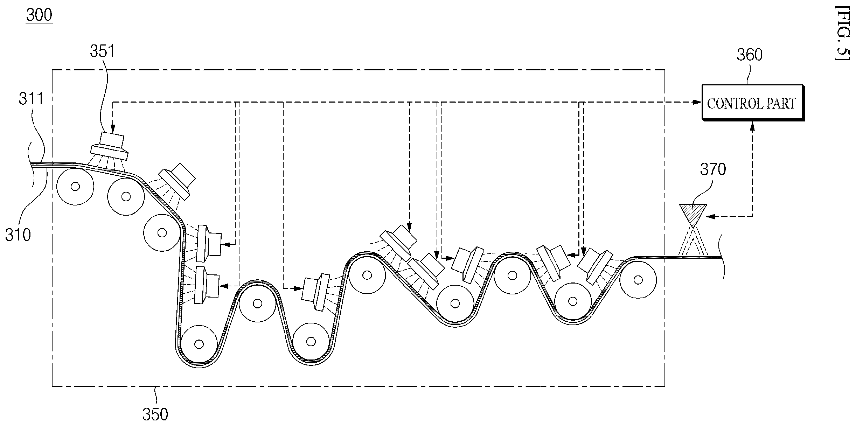

FIG. 5 is a schematic diagram illustrating an electrode manufacturing system according to a third embodiment of the present invention. Referring to FIG. 5, the electrode manufacturing system 300 may include a heat treatment part 350 including n heat sources 351 (wherein n is an integer greater than or equal to 2) arranged downstream of the drying part to apply additional heat to the dried electrode substrate 310, and may further include a control part 360 that controls operation of the n heat sources 351 (wherein n is an integer greater than or equal to 2).

In addition, the electrode manufacturing system 300 may further include a measurement part 370 that collects surface temperature information of the electrode substrate 310 that has passed through the heat treatment part 350, and transmits the collected information to the control part 360. Specifically, the measurement part 370 means collecting temperature information of the electrode slurry 311 formed on the electrode substrate 310. The measurement part 370 may include a temperature measurement sensor capable of measuring a surface temperature of the electrode substrate 310, and the temperature measurement sensor may be located adjacent to a point where the heat treatment part 350 ends. The measurement part 370 may include a function for transmitting temperature information measured from the electrode substrate 310 that has passed through the heat treatment part 350 to the control part 360. Meanwhile, the control part may receive the temperature information from the measurement part and may be equipped with a display that displays the received temperature information.

The control part 360 may include a function for receiving temperature information transmitted by the measurement part 370. By comparing the temperature information received from the measurement part 370 with the set range, the temperature level of the electrode substrate 310 can be determined, and if the surface temperature received from the measurement part 370 does not reach the set range, whether the n heat sources 351 (n is an integer greater than or equal to 2) operate and the intensity of the thermal energy supplied by the operating heat sources 351 can be controlled.

In addition, the control part 360 may include data processing functions that allow the operator to enter a set range and compare it to the temperature set range received from the measurement part 370 to determine whether the set range is reached, and if the surface temperature received from the measurement part 370 does not reach the set range, the control part 360 may control the operation of the heat source 351, such as commanding the operation of a heat source 351 that has stopped operating to begin operating, or commanding the output intensity of a heat source 351 that is operating to increase so that the surface temperature reaches the set range. Conversely, if the surface temperature received from the measurement part 370 reaches a set range, a command may be given to maintain the output intensity of the operating heat source 351 such that the surface temperature remains within the set range. In this case, the control part 360 may independently control the n heat sources 351 (where n is an integer greater than or equal to 2).

### (Fourth embodiment)

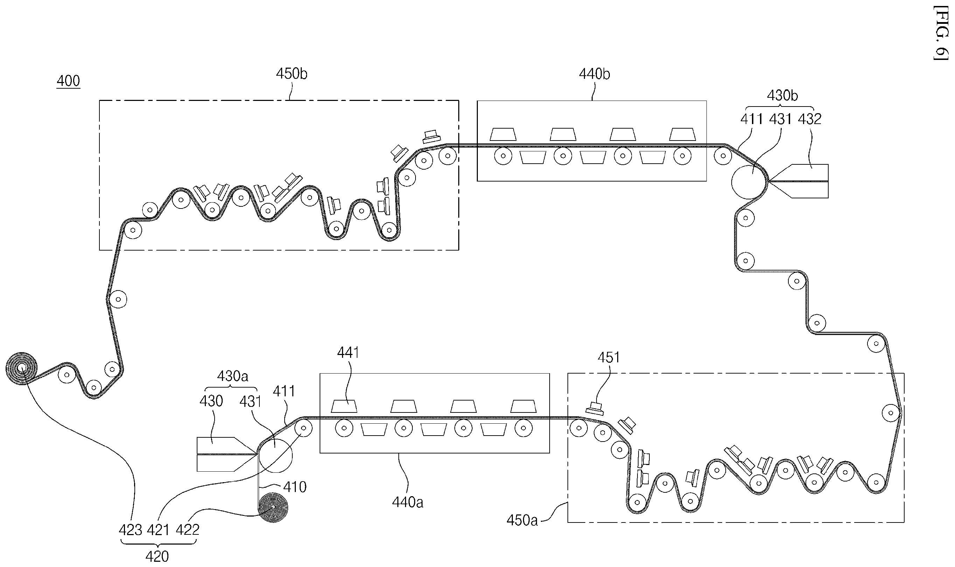

FIG. 6 is a schematic diagram illustrating an electrode manufacturing system according to a fourth embodiment of the present invention. Referring to FIG. 6, the electrode manufacturing system 400 is an embodiment for manufacturing an electrode having an electrode active material layer formed on both sides of an electrode current collector.

Referring to FIG. 6, an electrode manufacturing system 400 according to the present invention includes a transferring part 420, a first coating part 430a, a second coating part 430b, a first drying part 440a, a second drying part 440b, a first heat treatment part 450a, and a second heat treatment part 450b, wherein the electrode substrate transferred by the transferring part is configured to pass through the first coating part 430a, the first drying part 440a, the first heat treatment part 450a, the second coating part 430b, the second drying part 440b, and the second heat treatment part 450b sequentially.

The electrode manufacturing system 400 may be divided into two layers based on the second coating part 430b, which is the point where the top and bottom surfaces of the electrode substrate 410 transferred by the transferring part 420 are reversed. Specifically, the first coating part 430a, the first drying part 440a, and the first heat treatment part 450a may be arranged on the lower layer, and the second coating part 430b, the second drying part 440b, and the second heat treatment part 450b may be arranged on the higher layer.

The second coating part 430b is configured to apply an electrode slurry to a second surface on which an electrode active material layer has not been formed on the electrode substrate discharged from the first heat treatment part 450a, the second drying part 440b is configured to dry the electrode slurry applied to the second surface, and the second heat treatment part 450b is configured to apply heat to the electrode substrate discharged from the second drying part 440b.

As the second heat treatment part 450b heats the electrode substrate, the proportion of gamma crystal phase may be increased in the PVdF-based binder of the electrode active material layer formed on the second side of the electrode substrate. By adopting a two-layer structure format, the electrode manufacturing system 400 can heat treat both one side and the other side of the electrode substrate 410 to a high temperature to change the crystal phase of the PVdF-based binder of the electrode active material layer formed on both sides of the electrode substrate 410, thereby improving the adhesion of the electrode substrate 410.

The second coating part 430b, the second drying part 440b, and the second heat treatment part 450b are different in that they are for coating, drying, and heat treatment for the other side of the electrode base, but their specific contents are the same as the first coating part 430a, the first drying part 440a, and the first heat treatment part 450a, so a repeated description will be omitted.

The present invention can be more clearly understood by the following examples, which are for illustrative purposes only and are not intended to limit the invention.

### Example 1

A positive electrode slurry was prepared by mixing/stirring LiNi_{0.8}Co_{0.1}Mn_{0.1}O₂ as positive electrode active material, carbon black as a conductor, and PVdF as a binder in a weight ratio of 97:1.5:1.5 in N-methylpyrrolidone solvent. The solids content of the positive electrode slurry was 70 wt%.

Using a slot die coater, the positive electrode slurry was applied to an aluminum foil with a thickness of 12 *µ*m, and the electrode substrate applied with the positive electrode slurry was passed through a drying oven to complete drying. The positive electrode was manufactured by heating the electrode substrate taken out of the drying oven to a temperature of 170°C using a heating roller. Here, during the application, drying, and heat treatment of the positive electrode slurry, the transfer rate of the electrode substrate was 80 m/min, and the maximum temperature of the electrode substrate traveling in the drying oven was 120°C.

### Example 2

The positive electrode was prepared in the same way as in Example 1, except that heat was applied using IR instead of a heating roller to the electrode substrate taken out of the drying oven in Example 1.

### Example 3

The positive electrode was prepared in the same way as in Example 1, except that heat with a temperature of 180°C was applied to the electrode substrate taken out of the drying oven in Example 1.

### Comparative Example 1

The positive electrode was prepared in the same way as in Example 1, except that the process of applying heat with a temperature of 170°C to the electrode substrate that was dried in Example 1 was omitted.

### Comparative Example 2

The positive electrode was prepared in the same way as in Example 1, except that heat with a temperature of 120°C was applied to the electrode substrate taken out of the drying oven for the electrode substrate that had been dried in Example 1.

### Experimental Example 1: Calculating the proportion of gamma-type crystals

To determine the percentage of crystallization of the gamma (γ) phase of PVdF in each positive electrode of Examples 1 to 3 and Comparative Examples 1 to 2, solid 19 F-NMR measurements were performed using a DSX400 from Bruker-Biospin, Inc. under the following conditions.
Probes: 2.5 mmMAS probe
Measurement mode: Single pulse (pulse mode: zgO)
19F90° Pulse width: 5.0 µsec
Repetition wait time: 4 sec
MAS rotation rate: 32000 Hz
Measurement temperature: Room temperature (25°C)
Internal standard: C6F6 (-163.6 ppm)

In the obtained spectra, from the peak height of the signal of the α-type crystal at - 79.6 ppm (H_{α}), the peak height of the combined signal of the α- and β-type crystals at -93.7 ppm (H_{α+β}), and the peak height of the signal of the γ-type crystal at -101.3 ppm and -84.2 ppm (H_{γ}), the percentage of γ-type structural crystals was calculated using the following equation. The results are shown in Table 1. $Percentage of γ - type structure crystals \left(%\right) = \left\{\left({H}_{γ}/\left({H}_{α + β}+{H}_{α}+{H}_{γ}\right)\right.\right\} \times 100$

### Example 2: Measuring adhesion

The adhesion of each positive electrode of Examples 1 through 3 and Comparative Example 1 through Comparative Example 2 was measured as shown below, and the results are shown in Table 1.

Each positive electrode prepared in Examples 1-3 and Comparative Examples 1-2 was cut to 150 mm long and 20 mm wide, and the surface of the positive electrode was attached to a slide glass 75 mm long and 25 mm wide using double-sided tape in the longitudinal direction. That is, the slide glass was attached to an area corresponding to half of the longitudinal direction of the positive electrode. The evaluation sample was then prepared by rubbing the roller 10 times to ensure that the double-sided tape was attached uniformly.

Next, the slide glass portion of the evaluation sample was clamped to the sample stage of a Universal Testing Machine (UTM) (Product name: LS5, manufacturer: LLOYD), and the half of the positive electrode without the slide glass attached was connected to the load cell of the UTM machine. The load cell was moved at a speed of 100 mm/min, with a force at 90°, to 50 mm, and the load applied to the load cell was measured. The load applied to the load cell was then averaged over the 20 mm to 40 mm section of the run, and this was repeated five times to evaluate the average value as the positive electrode adhesion (gf/20mm) of each sample.

**[Table 1]**

| | Example 1 | Example 2 | Example 3 | Comparative Example 1 | Comparative Example 2 |
|---|---|---|---|---|---|
| Percentage of γ-type structure crystals (%) | 39 | 40 | 42 | 20 | 25 |
| Adhesion(gf/ 20mm) | 30 | 31 | 33 | 24 | 27 |

Referring to Table 1, it is found that the positive electrode prepared according to the present invention has a higher proportion of gamma-type crystal phase of PVdF compared to the positive electrode prepared according to the comparative example. Accordingly, the positive electrodes according to Examples 1 to 3 were found to have a superior adhesion effect compared to the positive electrodes of the comparative examples.

As described above, the electrode prepared according to the present invention has excellent adhesion due to the high proportion of gamma-type crystal phase of 30% or more in the PVdF-based binder.

While preferred embodiments of the present invention have been described above with reference to the drawings, it will be understood by those skilled in the art or having ordinary knowledge of the art that various modifications and changes can be made to the present invention as long as they are covered by the claims of the patent.

Accordingly, the technical scope of the invention is not limited to what is recited in the detailed description of the specification, but must be defined by the claims of the patent.

### [Reference numerals]

| | | | |
|---|---|---|---|
| 100, 200, 300, 400: | ELECTRODE MANUFACTURING SYSTEM | | |
| 110, 210, 310, 410: | ELECTRODE SUBSTRATE | 111, 211, 311, 411: | ELECTRODE SLURRY |
| 120, 420: | TRANSFERRING PART | 121, 421: | TRANSFER ROLLER |
| 122, 422: | UNWINDER | 130: | COATING PART |
| 131, 431: | COATING ROLLER | 132, 432: | SLOT DIE |
| 140: | DRYING PART | 150, 250, 350: | HEAT TREATMENT PART |
| 151, 251, 351: | HEAT SOURCES | 252: | BULKHEAD |
| 253: | ACCESS DOOR | 360: | CONTROL PART |
| 370: | MEASUREMENT PART | 423: | REWINDER |
| 430a: | FIRST COATING PART | 430b: | SECOND COATING PART |
| 440a: | FIRST DRYING PART | 440b: | SECOND DRYING PART |
| 450a: | FIRST HEAT TREATMENT PART | 450b: | SECOND HEAT TREATMENT PART |

## Claims

1. An electrode manufacturing system (100, 200, 300, 400) comprising:
a transferring part (120, 420) including a transfer roller (121, 421) configured to support and unidirectionally transfer a long sheet-shaped electrode substrate (110, 210, 310, 410);
a coating part (130) that applies an electrode slurry (111, 211, 311, 411) including a polyvinylidene fluoride (PVdF)-based binder to an electrode current collector;
a drying part (140) for drying the electrode substrate (110, 210, 310, 410) to which the electrode slurry (111, 211, 311, 411) has been applied; and
a heat treatment part (150, 250, 350) disposed downstream of the drying part (140), and configured to apply heat to an electrode substrate (110, 210, 310, 410) withdrawn from the drying part (140), wherein the heat treatment part (150, 250, 350) comprises a heat source (151, 251, 351) configured to apply heat to the electrode substrate (110, 210, 310, 410) between 170°C and 300°C, and
**characterized in that**
the transferring part (120, 420) is configured to transfer the electrode substrate (110, 210, 310, 410) at a speed of 50 to 100 m/min.

2. The electrode manufacturing system (100, 200, 300, 400) of claim 1, wherein
n heat sources are arranged in a direction in which the electrode substrate (110, 210, 310, 410) is transferred, wherein
the n heat sources are controlled independently, wherein
n is an integer greater than or equal to 2.

3. The electrode manufacturing system (100, 200, 300, 400) of claim 1, wherein
the heat source (151, 251, 351) is a heating roller with heat rays embedded inside a transfer roller (121, 421) for transferring an electrode substrate (110, 210, 310, 410).

4. The electrode manufacturing system (100, 200, 300, 400) of claim 1, wherein
the heat source (151, 251, 351) is selected from a laser module configured to apply a laser to an electrode substrate (110, 210, 310, 410) and an infrared heater configured to apply infrared radiation.

5. The electrode manufacturing system (100, 200, 300, 400) of claim 1, the electrode manufacturing system further comprises:
a control part (360) for controlling the operation of the heat source (151, 251, 351).

6. The electrode manufacturing system (100, 200, 300, 400) of claim 1, wherein
the transferring part (120, 420) is configured to transfer the electrode substrate (110, 210, 310, 410) at a speed of 70 to 100 m/min.

7. The electrode manufacturing system (100, 200, 300, 400) of claim 1, wherein
the coating part (130) includes a first coating part (430a) for applying an electrode slurry (111, 211, 311, 411) including a PVdF-based binder to one side of the electrode current collector; and a second coating part (430b) for applying an electrode slurry (111, 211, 311, 411) including a PVdF-based binder to the other side of the electrode current collector,
the drying part (140) includes a first drying part (440a) for drying the electrode substrate (110, 210, 310, 410) that has passed through the first coating part (430a); and a second drying part (440b) for drying the electrode substrate (110, 210, 310, 410) that has passed through the second coating part (430b),
the heat treatment part (150, 250, 350) includes a first heat treatment part (450a) disposed downstream of the first drying part (440a)and configured to apply heat to the electrode substrate (110, 210, 310, 410) taken out from the first drying part (440a); and a second heat treatment part (450b) disposed downstream of the second drying part (440b) and configured to apply heat to the electrode substrate (110, 210, 310, 410) taken out from the second drying part (440b), wherein
an electrode substrate (110, 210, 310, 410) transferred by the transferring part (120, 420) is configured to sequentially pass through the first coating part (430a), the first drying part (440a), the first heat treatment part (450a), the second coating part (430b), the second drying part (440b), and the second heat treatment part (450b).

8. The electrode manufacturing system (100, 200, 300, 400) of claim 1, wherein
the heat treatment part (150, 250, 350) comprises an open and close type bulkhead (252) for blocking at least a portion of a space to which a heat source (151, 251, 351) is applied from the outside.

9. The electrode manufacturing system (100, 200, 300, 400) of claim 1, wherein
the heat treatment part (150, 250, 350) is configured to apply heat only to a coated part where an electrode active material layer is formed on the electrode substrate (110, 210, 310, 410).

10. An electrode manufacturing method comprising:
a slurry coating layer formation step in which an electrode slurry (111, 211, 311, 411) including a polyvinylidene fluoride (PVdF)-based binder is applied on the electrode current collector;
a drying step to dry the electrode substrate (110, 210, 310, 410) on which the slurry coating layer is formed; and
a heat treatment step of applying heat to a dried electrode substrate to change a crystalline phase of a PVdF-based binder in the electrode substrate, wherein
the heat treatment step applies heat between 170°C and 300°C to the electrode substrate (110, 210, 310, 410), and **characterized in that**
in the drying step, the transfer rate of the electrode substrate (110, 210, 310, 410) is in the range of 50 to 100 m/min, preferably in the range of 70 to 100 m/min.

11. The electrode manufacturing method of claim 10, wherein
in the drying step, the drying temperature is in the range of 80 to 120°C.

## Patentansprüche

1. Elektrodenherstellungssystem (100, 200, 300, 400), umfassend:
einen Übertragungsteil (120, 420) mit einer Übertragungsrolle (121, 421), die so konfiguriert ist, dass sie ein langgestrecktes, blattförmiges Elektrodensubstrat (110, 210, 310, 410) trägt und unidirektional überträgt;
einen Beschichtungsteil (130), der eine Elektrodenaufschlämmung (111, 211, 311, 411), die ein Bindemittel auf Polyvinylidenfluorid (PVdF)-Basis enthält, auf einen Elektrodenstromabnehmer aufbringt;
einen Trocknungsteil (140) zum Trocknen des Elektrodensubstrats (110, 210, 310, 410), auf das die Elektrodenaufschlämmung (111, 211, 311, 411) aufgebracht wurde; und
einen Wärmebehandlungsteil (150, 250, 350), der dem Trocknungsteil (140) nachgeschaltet angeordnet ist und so konfiguriert ist, dass er Wärme auf ein aus dem Trocknungsteil (140) entnommenes Elektrodensubstrat (110, 210, 310, 410) aufbringt, wobei der Wärmebehandlungsteil (150, 250, 350) eine Wärmequelle (151, 251, 351) umfasst, die so konfiguriert ist, dass sie Wärme auf das Elektrodensubstrat (110, 210, 310, 410) zwischen 170 °C und 300 °C aufbringt, und
**dadurch gekennzeichnet, dass**
der Übertragungsteil (120, 420) so konfiguriert ist, dass er das Elektrodensubstrat (110, 210, 310, 410) mit einer Geschwindigkeit von 50 bis 100 m/min überträgt.

2. Elektrodenherstellungssystem (100, 200, 300, 400) nach Anspruch 1, wobei
n Wärmequellen in einer Richtung angeordnet sind, in der das Elektrodensubstrat (110, 210, 310, 410) übertragen wird, wobei
die n Wärmequellen unabhängig gesteuert werden, wobei
n eine ganze Zahl größer oder gleich 2 ist.

3. Elektrodenherstellungssystem (100, 200, 300, 400) nach Anspruch 1, wobei
die Wärmequelle (151, 251, 351) eine Heizwalze mit im Inneren einer Übertragungsrolle (121, 421) eingebetteten Wärmestrahlen zum Übertragen eines Elektrodensubstrats (110, 210, 310, 410) ist.

4. Elektrodenherstellungssystem (100, 200, 300, 400) nach Anspruch 1, wobei
die Wärmequelle (151, 251, 351) aus einem Lasermodul, das so konfiguriert ist, dass es einen Laser auf ein Elektrodensubstrat (110, 210, 310, 410) aufbringt, und einer Infrarotheizung, die so konfiguriert ist, dass sie Infrarotstrahlung aufbringt, ausgewählt ist.

5. Elektrodenherstellungssystem (100, 200, 300, 400) nach Anspruch 1, wobei das Elektrodenherstellungssystem ferner umfasst:
einen Steuerungsteil (360) zum Steuern des Betriebs der Wärmequelle (151, 251, 351).

6. Elektrodenherstellungssystem (100, 200, 300, 400) nach Anspruch 1, wobei
der Übertragungsteil (120, 420) so konfiguriert ist, dass er das Elektrodensubstrat (110, 210, 310, 410) mit einer Geschwindigkeit von 70 bis 100 m/min überträgt.

7. Elektrodenherstellungssystem (100, 200, 300, 400) nach Anspruch 1, wobei
der Beschichtungsteil (130) einen ersten Beschichtungsteil (430a) zum Aufbringen einer Elektrodenaufschlämmung (111, 211, 311, 411), die ein PVdF-basiertes Bindemittel enthält, auf eine Seite des Elektrodenstromabnehmer; und einen zweiten Beschichtungsteil (430b) zum Aufbringen einer Elektrodenaufschlämmung (111, 211, 311, 411), die ein PVdF-basiertes Bindemittel enthält, auf die andere Seite des Elektrodenstromabnehmers, umfasst,
der Trocknungsteil (140) einen ersten Trocknungsteil (440a) zum Trocknen des Elektrodensubstrats (110, 210, 310, 410), das den ersten Beschichtungsteil (430a) durchlaufen hat; und einen zweiten Trocknungsteil (440b) zum Trocknen des Elektrodensubstrats (110, 210, 310, 410), das den zweiten Beschichtungsteil (430b) durchlaufen hat, umfasst,
der Wärmebehandlungsteil (150, 250, 350) einen ersten Wärmebehandlungsteil (450a), der dem ersten Trocknungsteil (440a) nachgeschaltet angeordnet und so konfiguriert ist, dass er Wärme auf das aus dem ersten Trocknungsteil (440a) entnommene Elektrodensubstrat (110, 210, 310, 410) aufbringt; und einen zweiten Wärmebehandlungsteil (450b), der dem zweiten Trocknungsteil (440b) nachgeschaltet angeordnet und so konfiguriert ist, dass er Wärme auf das aus dem zweiten Trocknungsteil (440b) entnommene Elektrodensubstrat (110, 210, 310, 410) aufbringt, umfasst, wobei
ein durch den Übertragungsteil (120, 420) übertragenes Elektrodensubstrat (110, 210, 310, 410) so konfiguriert ist, dass es nacheinander den ersten Beschichtungsteil (430a), den ersten Trocknungsteil (440a), den ersten Wärmebehandlungsteil (450a), den zweiten Beschichtungsteil (430b), den zweiten Trocknungsteil (440b) und den zweiten Wärmebehandlungsteil (450b) durchläuft.

8. Elektrodenherstellungssystem (100, 200, 300, 400) nach Anspruch 1, wobei
der Wärmebehandlungsteil (150, 250, 350) ein Schott vom Öffnungs- und Schließtyp (252) zum Blockieren mindestens eines Teils eines Raumes, auf den eine Wärmequelle (151, 251, 351) von außen aufgebracht wird, umfasst.

9. Elektrodenherstellungssystem (100, 200, 300, 400) nach Anspruch 1, wobei
der Wärmebehandlungsteil (150, 250, 350) so konfiguriert ist, dass er Wärme nur auf einen beschichteten Teil aufbringt, wo eine Elektrodenaktivmaterialschicht auf dem Elektrodensubstrat (110, 210, 310, 410) gebildet ist.

10. Elektrodenherstellungsverfahren, umfassend:
einen Schritt zur Bildung einer Aufschlämmungsbeschichtungsschicht, bei dem eine Elektrodenaufschlämmung (111, 211, 311, 411), die ein Bindemittel auf Polyvinylidenfluorid (PVdF)-Basis enthält, auf den Elektrodenstromabnehmer aufgebracht wird;
einen Trocknungsschritt zum Trocknen des Elektrodensubstrats (110, 210, 310, 410), auf dem die Aufschlämmungsbeschichtungsschicht gebildet ist; und
einen Wärmebehandlungsschritt des Aufbringens von Wärme auf ein getrocknetes Elektrodensubstrat, um eine kristalline Phase eines PVdF-basierten Bindemittels in dem Elektrodensubstrat zu ändern, wobei
der Wärmebehandlungsschritt Wärme zwischen 170 °C und 300 °C auf das Elektrodensubstrat (110, 210, 310, 410) aufbringt, und **dadurch gekennzeichnet, dass** im Trocknungsschritt die Übertragungsrate des Elektrodensubstrats (110, 210, 310, 410) im Bereich von 50 bis 100 m/min, vorzugsweise im Bereich von 70 bis 100 m/min liegt.

11. Elektrodenherstellungsverfahren nach Anspruch 10, wobei
im Trocknungsschritt die Trocknungstemperatur im Bereich von 80 bis 120 °C liegt.

## Revendications

1. Système de fabrication d'électrode (100, 200, 300, 400) comprenant :
une partie de transfert (120, 420) incluant un rouleau de transfert (121, 421) configuré pour supporter et transférer unidirectionnellement un substrat d'électrode en forme de longue feuille (110, 210, 310, 410) ;
une partie de revêtement (130) qui applique une suspension d'électrode (111, 211, 311, 411) incluant un liant à base de poly(fluorure de vinylidène) (PVDF) sur un collecteur de courant d'électrode ;
une partie de séchage (140) pour sécher le substrat d'électrode (110, 210, 310, 410) sur lequel la suspension d'électrode (111, 211, 311, 411) a été appliquée ; et
une partie de traitement thermique (150, 250, 350) disposée en aval de la partie de séchage (140), et configurée pour appliquer de la chaleur à un substrat d'électrode (110, 210, 310, 410) retiré de la partie de séchage (140), dans lequel la partie de traitement thermique (150, 250, 350) comprend une source de chaleur (151, 251, 351) configurée pour appliquer de la chaleur au substrat d'électrode (110, 210, 310, 410) entre 170 °C et 300 °C, et
**caractérisé en ce que**
la partie de transfert (120, 420) est configurée pour transférer le substrat d'électrode (110, 210, 310, 410) à une vitesse de 50 à 100 m/min.

2. Le système de fabrication d'électrode (100, 200, 300, 400) selon la revendication 1, dans lequel
n sources de chaleur sont agencées dans une direction dans laquelle le substrat d'électrode (110, 210, 310, 410) est transféré, dans lequel
les n sources de chaleur sont contrôlées indépendamment, dans lequel
n est un nombre entier supérieur ou égal à 2.

3. Le système de fabrication d'électrode (100, 200, 300, 400) selon la revendication 1, dans lequel
la source de chaleur (151, 251, 351) est un rouleau chauffant avec des fils chauffants intégrés à l'intérieur d'un rouleau de transfert (121, 421) pour transférer un substrat d'électrode (110, 210, 310, 410).

4. Le système de fabrication d'électrode (100, 200, 300, 400) selon la revendication 1, dans lequel
la source de chaleur (151, 251, 351) est sélectionnée parmi un module laser configuré pour appliquer un laser à un substrat d'électrode (110, 210, 310, 410) et un dispositif de chauffage infrarouge configuré pour appliquer un rayonnement infrarouge.

5. Le système de fabrication d'électrode (100, 200, 300, 400) selon la revendication 1, le système de fabrication d'électrode comprenant en outre :
une partie de commande (360) pour commander le fonctionnement de la source de chaleur (151, 251, 351).

6. Le système de fabrication d'électrode (100, 200, 300, 400) selon la revendication 1, dans lequel la partie de transfert (120, 420) est configurée pour transférer le substrat d'électrode (110, 210, 310, 410) à une vitesse de 70 à 100 m/min.

7. Le système de fabrication d'électrode (100, 200, 300, 400) selon la revendication 1, dans lequel
la partie de revêtement (130) inclut une première partie de revêtement (430a) pour appliquer une suspension d'électrode (111, 211, 311, 411) incluant un liant à base de PVdF sur une face du collecteur de courant d'électrode ; et une seconde partie de revêtement (430b) pour appliquer une suspension d'électrode (111, 211, 311, 411) incluant un liant à base de PVdF sur l'autre face du collecteur de courant d'électrode,
la partie de séchage (140) inclut une première partie de séchage (440a) pour sécher le substrat d'électrode (110, 210, 310, 410) qui a traversé la première partie de revêtement (430a) ; et une seconde partie de séchage (440b) pour sécher le substrat d'électrode (110, 210, 310, 410) qui a traversé la seconde partie de revêtement (430b),
la partie de traitement thermique (150, 250, 350) inclut une première partie de traitement thermique (450a) disposée en aval de la première partie de séchage (440a) et configurée pour appliquer de la chaleur au substrat d'électrode (110, 210, 310, 410) retiré de la première partie de séchage (440a) ; et une seconde partie de traitement thermique (450b) disposée en aval de la seconde partie de séchage (440b) et configurée pour appliquer de la chaleur au substrat d'électrode (110, 210, 310, 410) retiré de la seconde partie de séchage (440b), dans lequel
un substrat d'électrode (110, 210, 310, 410) transféré par la partie de transfert (120, 420) est configuré pour passer séquentiellement à travers la première partie de revêtement (430a), la première partie de séchage (440a), la première partie de traitement thermique (450a), la seconde partie de revêtement (430b), la seconde partie de séchage (440b), et la seconde partie de traitement thermique (450b).

8. Le système de fabrication d'électrode (100, 200, 300, 400) selon la revendication 1, dans lequel
la partie de traitement thermique (150, 250, 350) comprend une cloison de type ouverte-fermée (252) pour bloquer au moins une partie d'un espace auquel une source de chaleur (151, 251, 351) est appliquée depuis l'extérieur.

9. Le système de fabrication d'électrode (100, 200, 300, 400) selon la revendication 1, dans lequel
la partie de traitement thermique (150, 250, 350) est configurée pour appliquer de la chaleur uniquement à une partie revêtue où une couche de matériau actif d'électrode est formée sur le substrat d'électrode (110, 210, 310, 410).

10. Procédé de fabrication d'électrode comprenant :
une étape de formation de couche de revêtement de suspension dans laquelle une suspension d'électrode (111, 211, 311, 411) incluant un liant à base de poly(fluorure de vinylidène) (PVDF) est appliquée sur le collecteur de courant d'électrode ;
une étape de séchage pour sécher le substrat d'électrode (110, 210, 310, 410) sur lequel la couche de revêtement de suspension est formée ; et
une étape de traitement thermique consistant à appliquer de la chaleur à un substrat d'électrode séché pour changer une phase cristalline d'un liant à base de PVDF dans le substrat d'électrode, dans lequel
l'étape de traitement thermique applique de la chaleur entre 170 °C et 300 °C au substrat d'électrode (110, 210, 310, 410), et **caractérisé en ce que**
lors de l'étape de séchage, la vitesse de transfert du substrat d'électrode (110, 210, 310, 410) est dans la plage de 50 à 100 m/min, de préférence dans la plage de 70 à 100 m/min.

11. Le procédé de fabrication d'électrode selon la revendication 10, dans lequel lors de l'étape de séchage, la température de séchage est dans la plage de 80 à 120 °C.
